# EUROPÄISCHE PATENTSCHRIFT

(11) **EP 1 680 620 B1**
(45) Veröffentlichungstag und Bekanntmachung des Hinweises auf die Patenterteilung: **23.05.2018**
(21) Anmeldenummer: 04791241.5
(22) Anmeldetag: 15.10.2004
(51) Int. Cl.: F17C 5/06, F17C 13/02

(54) **VERFAHREN ZUR GASBEFÜLLUNG VON DRUCKGEFÄSSEN**
METHOD FOR FILLING A PRESSURE VESSEL WITH GAS
PROCEDE DE REMPLISSAGE DE RECIPIENTS A PRESSION AVEC UN GAZ

(30) Priorität: 17.10.2003 DE 10349108
(43) Veröffentlichungstag der Anmeldung: 19.07.2006
(73) Patentinhaber: L'AIR LIQUIDE, Société Anonyme pour l'Etude et l'Exploitation des Procédés Georges Claude, 75007 Paris (FR); Air Liquide Deutschland GmbH, 47805 Krefeld (DE); Messer Group GmbH, 65812 Bad Soden (DE)
(72) Erfinder: GRABHORN, Hermann, 40474 Düsseldorf (DE); KLEBE, Ulrich, 47647 Kerken (DE); MICHEL, Friedel, 40699 Erkrath (DE)
(74) Vertreter: Münzel, Joachim R.
(86) Internationale Anmeldenummer: PCT/EP2004/052560
(87) Internationale Veröffentlichungsnummer: WO 2005/043033

(56) Entgegenhaltungen:
- DE-A- 10 107 895
- DE-A- 10 119 115
- DE-A- 19 817 324
- PATENT ABSTRACTS OF JAPAN Bd. 007, Nr. 055 (M-198), 5. März 1983 (1983-03-05) & JP 57 200793 A (SAGAMI ASECHIREN KK), 9. Dezember 1982 (1982-12-09)
- PATENT ABSTRACTS OF JAPAN Bd. 012, Nr. 212 (M-710), 17. Juni 1988 (1988-06-17) & JP 63 013999 A (NICHIGOU ASECHIREN KK), 21. Januar 1988 (1988-01-21)

## Beschreibung

Bei Airbags in Fahrzeugen kommen verstärkt neue Gasgeneratoren zum Einsatz, die den Luftsack bei einem Unfall in wenigen Millisekunden aufblasen. Zur Zeit werden drei Typen von Gasgeneratoren eingesetzt:
- Chemische Generatoren, bei denen das Gas durch die Reaktion eines chemischen Feststoffes mit der Umgebungsluft erzeugt wird;
- So genante Hybridgeneratoren, die aus einer Kombination von Festbrennstoff und Druckgaspackung bestehen und
- reine Gasgeneratoren mit einem Hochdruck-Gasspeichersystem bei Drücken bis zu 700 Bar bei 15 ° C.

Die Gasgeneratoren, die mit verschiedenen Gasen gefüllt sind, werfen bei der Herstellung enorme technische Probleme auf, sowohl bei deren Herstellung als auch bei der Befüllung mit Drucken bis zu 1000 Bar. Diese Drucke werden insbes. bei schneller Befüllung auf Grund der Kompressionswärme erforderlich, um die genau vorgegebenen Gasmassen einzufüllen. Diese sind für die spätere Aufblascharakteristik des Airbags von entscheidender Bedeutung.

Als Gase kommen z.B. zum Einsatz Argon, Sauerstoff, Stickstoff, Distickstoffmonoxid (Lachgas), sowohl als Reinstgase als auch als Gasgemische aus diesen Komponenten.

Bei gasgefüllten Gasgeneratoren wird gefordert:
1. Fülldrucke bis 1000 bar (P(T)) für höhere Speicherdichte bzw. kompaktere Baumaße
2. Genaue und Exakte Füllmengenbestimmung bei hohen Drucken
3. Schnelle Befüllung, da diese die Taktzeiten bestimmt
4. Der Vorgang muß in hohem Maße reproduzierbar sein.

Um die sehr hohen Drucke zu erzeugen sind sehr teure und aufwendige Kolben- oder Membranverdichter erforderlich. Dies führt zu hohen Invest-Kosten, hohen Betriebs- und Wartungskosten. Zusätzlich wird eine für diese Drucke entsprechend aufwendige und teure nachgeschaltete Gasversorgung erforderlich.

Mit zunehmenden Drucken steigt auf Grund der Kompressionswärme und der ungleichen Temperaturverteilung im Druckbehälter die Ungenauigkeit der exakten Füllmengenbestimmung, die aber für die spätere definierte Funktionsweise des Generators zwingend erforderlich ist.

Mit zunehmenden Drucken wird es technisch schwieriger und aufwendiger schnelle Füllzeiten zu erreichen. Es besteht der direkte Zusammenhang zwischen Füllzeit und der Erwärmung während des Füllvorgangs. D.h. je schneller gefüllt wird um so mehr steigt die Gastemperatur. Dies hat zur Folge hat, dass der Fülldruck noch weiter erhöht werden muß um bei 15 °C oder einer anderen definierten Temperatur die exakte Menge Gas zu erzielen.

Die Reproduzierbarkeit wird aus den genannten Gründen schwieriger, oder bedeutet aufwendige QS-Maßnahmen, wie z.B. das Wiegen der gefüllten Behälter zur exakten Füllmengenbestimmung. Gleichzeitig ist eine stark steigende Ausschussrate bei höheren Drucken zu erwarten. Dies wiederum führt zu geringerer Wirtschaftlichkeit des ganzen Prozesses und damit zu höheren Herstellkosten.

*In der* DE101 07 895 A1 *ist ein Verfahren zur Befüllung von Druckbehältern mit tiefsiedenden Gasen beschrieben, bei dem das Füllgas und*/*oder der zu befüllende Druckbehälter vor der Zuführung an den zu befüllenden Druckbehälter gekühlt wird. Nach Beenden des Befüllvorgangs wird der Druckbehälter druckdicht verschlossen. Mit dem Aufwärmen steigt der Druck im Druckbehälter stark an. Problematisch ist bei diesem vorbekannten Gegenstand jedoch, dass es mit ihm nicht gelingt, einen Behälter mit einem Gasgemisch mit reproduzierbarer Zusammensetzung herzustellen.*

Der Erfindung liegt die Aufgabe zugrunde, ein alternatives Verfahren für die Hochdruck-Gasbefüllung von Druckgefäßen, insbesondere von Druckgefäßen in Airbag-Gasgeneratoren zu schaffen.

Diese Aufgabe wird erfindungsgemäß gelöst durch ein Verfahren mit den Merkmalen des Anspruchs 1.

*Bei dem Verfahren zur Hochdruck-Befüllung eines Druckgefäßes mit einem Gas oder Gasgemisch, bei dem das Druckgefäß gekühlt und mit mindestens einem Gas bei einer Temperatur oberhalb der Siedetemperatur des Gases oder der Gase befüllt, im gekühlten Zustand verschlossen und ein Druck im befüllten und verschlossenen Druckgefäß durch Erwärmung hergestellt wird* - *Üblicherweise wird auf Umgebungstemperatur oder Einsatztemperatur des Druckgefäßes erwärmt - ist dadurch gekennzeichnet, dass das Gas ein Gasgemisch ist, und dass das Druckgefäß mit einem Gasgemisch durch aufeinander folgende Befüllung mit den Gaskomponenten des herzustellenden Gasgemisches befüllt wird.*

Zur Befüllung wird das gekühlte Druckgefäß mit einer Druckgasquelle verbunden. Die Druckgasquelle weist eine höhere Temperatur als das gekühlte Druckgefäß auf. In der Regel ist die Druckgasquelle ungekühlt. Die Druckgasquelle weist z.B. Umgebungstemperatur oder eine höhere Temperatur auf. Die Druckgasquelle enthält in der Regel ein komprimiertes Gas oder Gasgemisch, vorzugsweise auf Hochdruck komprimiert. Z.B. weist das Gas oder Gasgemisch in der Druckgasquelle einen Druck größer oder gleich 100 bar absolut, größer oder gleich 200 bar absolut größer oder gleich 300 bar absolut oder größer oder gleich 400 bar absolut auf.

Bei der Befüllung oder zur Befüllung des Druckgefäßes wird vorteilhaft kein Mittel oder keine Vorrichtung zur mechanischen Verdichtung dew zu befüllenden Gases wie ein Kompressor oder eine Gaspumpe eingesetzt. Das heißt zwischen der Druckgasquelle und dem Druckgefäß erfolgt keine mechanische Verdichtung des Gases oder Gasgemisches, das in das gekühlte Druckgefäß eingeleitet wird.

Das Verfahren dient vorzugsweise zum Befüllen eines Druckgefäßes in einem Airbag-System mit einem Gas oder Gasgemisch.

Das Druckgefäß entspricht beispielsweise einem Druckgefäß in üblichen Gasgeneratoren für Airbag-Systeme.

Das Druckgefäß ist vorzugsweise ein Teil eines Gasgenerators eines Airbag-Systems. Das Druckgefäß ist beispielsweise auch ein selbständiges Teil wie eine Druckpatrone, ein Kleinstdruckgasbehälter oder kleinerer Druckgasbehälter. Das Druckgefäß ist vorzugsweise ein kryotaugliches Druckgasgefäß, das den durch die tiefkalte Befüllung ausgelösten, abrupten, lokalen Temperaturänderungen zwischen der Umgebungstemperatur und der Fülltemperatur, beispielsweise bis -200 °C, standhält und das eingefüllte Gas nach der Temperaturerhöhung bei den resultierenden Speicherdrücken sicher umschließt. Geeignete Werkstoffe für die Druckgefäße sind z.B. die standardisierten, metastabilen austenitischen CrNi-Stähle, insbesondere die Typen 1.4301, 1.4307, 1.4306, 1.4541.

Bei dem Verfahren wird das Druckgefäß, z.B. eine zu befüllende Kammer in einem Gasgenerator eines Airbag-Systems, mit einer Druckgasquelle für das Füllgas verbunden. In der Regel erfolgt dies über eine Gasleitung. Die Druckgasquelle ist beispielsweise ein Druckgasbehälter, insbesondere eine Druckgasflasche, oder eine Hochdruckgasversorgung. Nach Verbindung der Füllkammer mit der Druckgasquelle werden in der Regel die Wände der zu befüllenden Kammer, des Druckgefäßes, auf die Befülltemperatur abgekühlt. Die Befülltemperatur liegt in der Regel unter 0°C, vorzugsweise unter minus 50 °C und besonders bevorzugt unter minus 100 °C, insbesondere bei einer Temperatur unter minus 150 °C. Vorteilhaft ist eine Befüllung bei der Siedetemperatur von kälteverflüssigtem Wasserstoff (-253 °C), kälteverflüssigtem Stickstoff (-196 °C), kälteverflüssigtem Sauerstoff (-183 °C), kälteverflüssigtem Argon (-186 °C) oder anderer Kältemittel oder Salzlösungen, sowie bei der Sublimationstemperatur von z.B. Trockeneis (-78,5 °C), je nach Art des Füllgases und des gewünschten, zu erzeugenden Fülldruckes. Die Kühlung des Druckgefäßes erfolgt bevorzugt bei einer konstanten Temperatur. Die Kühlung erfolgt z.B. mittels eines Kältebades oder Tauchbades mit einer Kühlflüssigkeit (z.B. tiefkalt verflüssigte Gase), eines Kühlblocks (z.B. gekühlter Metallblock), eines kalten Gases (z.B. Einsatz eines Gastunnels), kalten Feststoffteilchen (z.B. gekühlte Metallkugeln, Trockeneisteilchen), einem kalten Feststoff (z.B. Trockeneis) oder einer thermostatisierbaren Kühleinrichtung. Beispielsweise erfolgt die Kühlung in einem Tauchbad mit einem Kältemittel wie kälteverflüssigtem Sticktoff (LN2). Ein Kältebad mit einem tiefkalt verflüssigten Gas oder Trockeneis bietet den Vorteil guter Wärmeübergänge und deshalb hervorragender Temperaturkonstanz.

Besonders vorteilhaft ist die Verwendung eines tiefkalt verflüssigten Gases (z. B. LN2) als Kältemittel in einem Kältebad:
- Am Siedepunkt ist die Temperatur nur vom Druck abhängig, also z. B. bei konstantem Umgebungsdruck exakt definiert.
- Durch den guten Wärmeübergang in der siedenden Flüssigkeit werden der Behälter und sein Inhalt schnell auf ebenfalls exakt die Siedetemperatur gebracht.
- Der Fülldruck zur Erzielung der erforderlichen Füllmenge wird gegenüber einem konventionellen Füllverfahren drastisch abgesenkt, z. B. auf 20 - 25%, d.h. um den Faktor 4 bis 5.

Das zu speichernde Gas oder Gasgemisch gelangt vorteilhaft im tiefkalten, gasförmigen Zustand (z.B. durch Kühlung im Druckgefäß oder durch Kühlung vor dem Druckgefäß) in das Druckgefäß. Das Druckgefäß ist vor der Befüllung vorteilhaft evakuiert. Zur Befüllung wird eine Verbindung zwischen dem gekühlten Druckgefäß und der in der Regel ungekühlten Druckgasquelle hergestellt und ein bestimmter Druck eingestellt. Die Druckgasquelle (z.B. eine Druckgasquelle mit dem Gas oder Gasgemisch) weist in der Regel eine Temperatur im Bereich von 0 °C und 100 °C auf. Die Druckgasquelle hat z.B. Umgebungstemperatur, insbesondere Raumtemperatur (15 bis 30 °C). Bei der Befüllung des Druckgefäßes unterscheidet sich die Temperatur von Druckgefäß und Druckgasquelle vorzugsweise um mindestens 50 °C, besonders bevorzugt um mindestens 100 °C, insbesondere um mindestens 150 °C. Die Temperatur des Gases oder Gasgemisches in Druckgefäß und Druckgasquelle unterscheidet sich bei der Befüllung vorzugsweise um mindestens 50 °C, besonders bevorzugt um mindestens 100 °C, insbesondere um mindestens 150 °C.

Der eingestellte oder bestehende Druck, das ist der Druck im gekühlten Druckgefäß (primärer Fülldruck), liegt im allgemeinen im Bereich von über 1 bar bis 400 bar absolut, vorzugsweise im Bereich von 10 bar bis 300 bar absolut, besonders bevorzugt im Bereich von 50 bar bis 150 bar absolut, insbesondere im Bereich von 70 bar bis 100 bar absolut.

Die Befülltemperatur (Kühltemperatur) des Druckgefäßes wird vorzugsweise so gewählt, dass die Befülltemperatur über dem Siedepunkt des eingefüllten Gases oder dem Siedepunkt der höchstsiedenden Gaskomponente des eingefüllten Gasgemisches liegt, damit keine Kondensation des Gases in dem Druckgefäß erfolgt.

Dies erlaubt eine manometrische Kontrolle der Befüllung und eine manometrische Bestimmung der Füllmenge.

Nach der Befüllung des gekühlten Druckbehälters wird dieser verschlossen und es folgt eine Erwärmung des Druckbehälters mit dem eingefüllten Gas. In der Regel wird auf die spätere Gebrauchstemperatur (Umgebungstemperatur oder Raumtemperatur) erwärmt. Die Erwärmung erfolgt beispielsweise durch Entfernung der Kühlquelle (z.B. durch Entnahme des gefüllten Druckbehälters aus einem Kältebad). Die Erwärmung auf Umgebungstemperatur erfolgt also beispielsweise durch Wärmeaustausch mit der Umgebung. Die Erwärmung wird alternativ auch durch aktive Beheizung bewirkt. Der End-Fülldruck oder sekundäre Fülldruck (Gleichgewichtsdruck) stellt sich nach der Erwärmung auf die gewünschte Temperatur, in der Regel die Umgebungstemperatur, ein. Der End-Fülldruck ist durch die eingefüllte Gasmenge bestimmt.

Vorzugsweise wird ein permanentes Gas mit einer Siedetemperatur von höchstens minus 100°C oder ein Gasgemisch mit Gaskomponenten mit einer Siedetemperatur von höchstens minus 100°C, z.B. die Gase oder die Gaskomponenten Helium (He), Wasserstoff (H₂), Stickstoff (N₂), Sauerstoff (O₂) oder Argon (Ar). Besonders interessant sind Druckgefäße oder Gasgeneratoren mit einer reinen Helium-Füllung. Helium hat einen positiven Joule Thomson Koeffizienten. Das bedeutet, dass dieses Gas bei der schnellen Entspannung nicht abkühlt.

In Tabelle 1 werden beispielhaft geeignete Fülltemperaturen für verschiedene Füllgase aufgeführt.

**Tabelle 1: Beispiele von Gasen und Fülltemperaturen (fl. = flüssig)**

| Gas oder Gasgemisch | Fülltemperatur / °C; Kältemittel (kälteverflüssigte Gase) | | | |
|---|---|---|---|---|
| Helium | -253 °C; fl. H₂ | -196 °C; fl. N₂ | -186 °C; fl. Ar | -183 °C; fl. O₂ |
| Wasserstoff | | -196 °C; fl. N₂ | -186 °C; fl. Ar | -183 °C; fl. O₂ |
| Stickstoff | | | -186 °C; fl. Ar | -183 °C; fl. O₂ |
| Argon | | | | -183 °C; fl. O₂ |
| Sauerstoff | größer als -183 °C, z.B. -78,5 °C (Trockeneiskühlung) | | | |
| Ar/He/ O₂, 77:3:20 Vol.-% | größer als -183 °C, z.B. -78,5 °C (Trockeneiskühlung) | | | |
| N₂/He/ O₂, 77:3:20 Vol.-% | größer als -183 °C, z.B. -78,5 °C (Trockeneiskühlung) | | | |
| N₂/He, 97:3 Vol.-% | -186 °C; fl. Ar oder -183 °C; fl. O₂ | | | |

Je nachdem, wie groß die zugeführte Gasmenge ist, können so ohne größeren technischen und energetischen Aufwand sehr hohe Speicherdrücke, insbesondere auch solche über 300 bar, insbesodere über 400 bar, realisiert werden.

Die Fülltemperaturen, insbesondere in Tabelle 1, entsprechen den Siedetemperaturen der Kältemittel bei Umgebungsdruck. Es können höhere Fülltemperaturen bei Einsatz der Kältemittel durch Druckerhöhung bis maximal zum kritischen Druck eingestellt werden. Bei dieser Verfahrensvariante wird z.B. das Tauchbad druckdicht verschlossen. Gegenstand der Erfindung ist somit auch ein Verfahren, bei dem unter Druck stehende Kältemittel eingesetzt werden. Vorteilhaft wird die Temperatur des Kältebades oder einer entsprechend eingesetzten Kältequelle mit einem Kältemittel durch Veränderung des auf das Kältemittel einwirkenden Druckes verändert, gesteuert und/oder geregelt.

Die Vorteile des Verfahrens:
- Die Befüllung kann mit wesentlich niedrigeren Arbeitsdrucken erfolgen.
- Keine Höchstdruckkompressoren erforderlich, Standardkomponenten sind einsetzbar.
   ▪ Entsprechend wirtschaftlicher, geringere Wartungs- und Betriebskosten
- Reproduzierbar und exakt.
- Geringer Ausschuss.
- Hoher Wirkungsgrad z.B. bei Helium, geringe Verluste
   ▪ Entsprechend wirtschaftlicher
- Weniger aufwendige Qualitätssicherung, sogar kompletter Wegfall möglich.
- Der Prozess ist schnell und in hohem Maß automatisierbar.

Ein weiterer Gegenstand der Erfindung ist die Verwendung einer Vorrichtung, bestehend aus mindestens einer Druckgasquelle, mindestens einem Druckgefäß mit Kühleinrichtung, einer Verbindungsleitung zwischen Druckgasquelle und Druckgefäß und mindestens einem Ventil, zur Befüllung von Druckgefäßen von Airbag-Systemen mit mindestens einem Gas oder Gasgemisch ohne mechanische Verdichtung.

Die Erfindung wird anhand der Zeichnung erläutert.
Fig. 1 zeigt ein stark vereinfachtes Schema einer Fülleinrichtung für Druckgefäße.
Fig. 2 zeigt schematisch und als Beispiel die verschiedenen Stufen eines Füllprozesses für Druckgefäße.

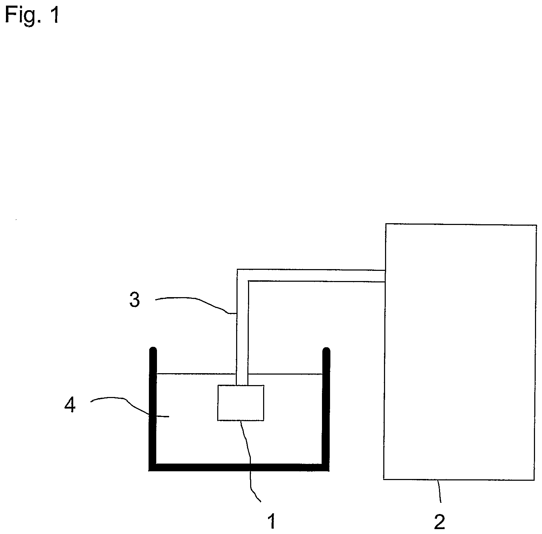

Die Fülleinrichtung in Fig. 1 weist ein zu befüllendes Druckgefäß 1, eine Druckgasquelle 2, z.B. eine Druckgasflasche (Fülldruck z.B. 300 bar) mit Helium oder Wasserstoff mit Absperrventil und Druckminderer, eine Gasverbindungsleitung 3 und ein Kältebad 4 mit einem tiefkalt verflüssigten Gas wie Flüssigstickstoff als Kältemittel auf. Das Druckgefäß 1 ist z.B. Teil eines Gasgenerators eines Airbag-Systems oder eine Gaspatrone.

Nach Eintauchen des Druckgefäßes 1 in das Kältebad 4 wird das zu füllende Gas aus der Druckgasquelle 2 in das Druckgefäß 1 durch Einstellung eines gewünschten Druckes (z.B. 90 bar absolut; eingestellt am Druckminderer der Druckgasflasche) gefüllt. Das Gas, z. B. Helium oder Wasserstoff, nehmen hierbei schnell die Temperatur der Oberfläche und damit der Siedetemperatur des Kältemittels an. Das Gas wird im Druckgefäß 1 auf die Temperatur des Kältebades abgekühlt. Die Siedetemperatur des Gases liegt unter der Temperatur des Kältebades, so dass keine Kondensation des Gases im Druckgefäß 1 eintritt. Es stellt sich eine der Temperatur entsprechende Dichte ein, die wesentlich höher ist als bei Raumtemperatur. Die erforderliche Füllmasse des Gases lässt sich bei der konstanten Temperatur des Kältebades einfach über den Fülldruck exakt und reproduzierbar einstellen. Anschließend wird das Druckgefäß 1 mit geeigneten Mitteln unter Druck verschlossen. Der Verschluß des Druckgefäßes 1 erfolgt z.B. am Füllrohr (Gaszuleitung 3), das direkt nach dem Temperaturausgleich bei der Fülltemperatur zugequetscht und/oder zugeschweißt wird. Anschließend wird der Behälter aus dem Kältebad entnommen und erwärmt.

Man erzeugt über die Temperaturerhöhung (Erwärmung) eine Druckerhöhung (bei Helium ca. 3,7-fach, bei H₂ ca. 5-fach für einen Temperaturanstieg von 77 auf 288 K). Mit Gas aus einem Druckgasbehälter, insbesondere aus konventionellen Druckgasflaschen, lassen sich so z.B. Fülldrücke von 700 bar oder 1000 bar (bei Raumtemperatur) erzeugen. Bei dem Verfahren wird vorzugsweise kein Mittel zur Druckerzeugung (z.B. Kompressor oder Gaspumpe) zwischen Druckgefäß 1 und Druckgasquelle 2 eingesetzt.

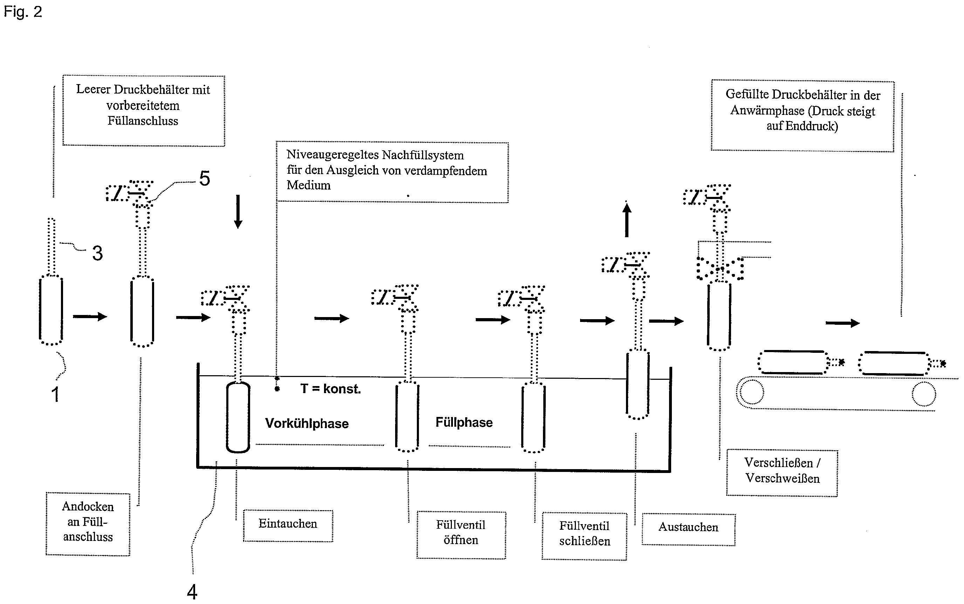

In Fig. 2 werden Schritte bei der Gasbefüllung von Druckgefäßen 1 dargestellt. Das Druckgefäß wird während der Befüllung mit der Druckgasquelle 2 (nicht gezeigt) verbunden. Die Verbindung erfolgt über einen Anschluß der Füllleitung am Absperrventil 5. Das Verfahren arbeitet vorzugsweise ohne Einsatz eines Kompressors oder einer Pumpe.

## Patentansprüche

1. Verfahren zur Hochdruck-Befüllung eines Druckgefäßes mit einem Gas, wobei das Druckgefäß gekühlt und mit mindestens einem Gas bei einer Temperatur oberhalb der Siedetemperatur des Gases befüllt, im gekühlten Zustand verschlossen wird und ein Druck im befüllten und verschlossenen Druckgefäß durch Erwärmung hergestellt wird,
**dadurch gekennzeichnet,**
**dass** das Gas ein Gasgemisch ist und dass das Druckgefäß mit einem Gasgemisch durch aufeinander folgende Befüllung mit den Gaskomponenten des herzustellenden Gasgemisches befüllt wird.

2. Verfahren nach Anspruch 1, **dadurch gekennzeichnet, dass** ein Druck von mehr als 100 bar oder von mehr als 200 bar oder von mehr als 300 bar im befüllten Druckgefäß durch Erwärmung des Gasgemisches erzeugt wird.

3. Verfahren nach Anspruch 1 oder 2, **dadurch gekennzeichnet, dass** die Erwärmung des Gases durch aktive Beheizung oder durch Temperaturausgleich auf Raumtemperatur, Umgebungstemperatur, eine Temperatur oberhalb 0°C oder eine andere Temperatur erfolgt.

4. Verfahren nach einem der Ansprüche 1 bis 3, **dadurch gekennzeichnet, dass** ein reines Gas mit einer Siedetemperatur von weniger als minus 50 °C oder ein Gasgemisch, dessen höchstsiedende Gaskomponente eine Siedetemperatur von weniger als minus 50 °C aufweist, zur Befüllung eingesetzt wird.

5. Verfahren nach einem der Ansprüche 1 bis 5, **dadurch gekennzeichnet, dass** die Befüllung des Druckgefäßes bei einer Kälte von mindestens minus 50 °C oder weniger erfolgt.

6. Verfahren nach einem der Ansprüche 1 bis 5, **dadurch gekennzeichnet, dass** die Befüllung des Druckgefäßes bei konstanter oder nahezu konstanter Temperatur erfolgt.

7. Verfahren nach einem der Ansprüche 1 bis 6, **dadurch gekennzeichnet, dass** bei der Befüllung des Druckgefäßes ein gekühltes Druckgefäß eingesetzt wird, wobei die Kühlung mittels eines Kältebades, eines Kühlblocks, eines kalten Gases, kalten Feststoffteilchen oder anderer Kältemittel oder einer thermostatisierbaren Kühleinrichtung erfolgt.

8. Verfahren nach einem der Ansprüche 1 bis 7, **dadurch gekennzeichnet, dass** die Bestimmung und Kontrolle der Füllmenge bei der Befüllung manometrisch erfolgt.

9. Verfahren nach einem der Ansprüche 1 bis 8, **dadurch gekennzeichnet, dass** bei der Befüllung des Druckgefäßes das Druckgefäß mit einer Druckgasquelle verbunden ist, wobei die Druckgasquelle eine Temperatur aufweist, die über der Temperatur des Druckgefäßes liegt.

10. Verfahren nach einem der Ansprüche 1 bis 9, **dadurch gekennzeichnet, dass** bei der Befüllung des Druckgefäßes das Druckgefäß mit einer Druckgasquelle verbunden ist und sich die Temperatur von Druckgefäß und Druckgasquelle um mindestens 50 °C unterscheiden und/oder sich die Temperatur des Gases oder Gasgemisches in Druckgefäß und Druckgasquelle um mindestens 50 °C unterscheiden.

11. Verfahren nach einem der Ansprüche 1 bis 10, **dadurch gekennzeichnet, dass** die Befüllung des Druckgefäßes mit einem Gas oder Gasgemisch unter Druck erfolgt.

12. Verfahren nach einem der Ansprüche 1 bis 11, **dadurch gekennzeichnet, dass** die Befüllung des Druckgefäßes bei einem Druck von mindestens 10 bar absolut erfolgt.

13. Verfahren nach einem der Ansprüche 1 bis 12, **dadurch gekennzeichnet, dass** die Befüllung des Druckgefäßes bei einem Druck im Bereich von 50 bis 400 bar absolut erfolgt.

14. Verfahren nach einem der Ansprüche 1 bis 13, **dadurch gekennzeichnet, dass** die Befüllung des Druckgefäßes mit einem vorgekühlten Gas oder Gasgemisch erfolgt.

15. Verfahren nach einem der Ansprüche 1 bis 14, **dadurch gekennzeichnet, dass** das Gas oder Gasgemisch auf die Fülltemperatur vorgekühlt wird.

16. Verfahren nach einem der Ansprüche 1 bis 15, **dadurch gekennzeichnet, dass** zur Kühlung ein unter Druck stehendes Kältemittel eingesetzt wird oder die Temperatur bei der Kühlung durch Druckeinwirkung eingestellt, gesteuert oder geregelt wird.

17. Verfahren nach einem der Ansprüche 1 bis 16, **gekennzeichnet durch** den Einsatz beim Befüllen von Airbag-Gasgeneratoren.

## Claims

1. Method for the high-pressure filling of a pressure vessel with a gas, in which the pressure vessel is cooled and filled with at least one gas at a temperature above the boiling point of the gas, is closed in the cooled state and a pressure is produced in the filled and closed pressure vessel by warming, **characterized in that** the gas is a gas mixture and **in that** the pressure vessel is filled with a gas mixture by successive filling with the gas components of the gas mixture that is to be produced.

2. Method according to Claim 1, **characterized in that** a pressure of more than 100 bar or of more than 200 bar or of more than 300 bar is produced in the filled pressure vessel by warming the gas mixture.

3. Method according to Claim 1 or 2, **characterized in that** the warming of the gas is effected by active heating or by temperature compensation to room temperature, ambient temperature, a temperature above 0°C or another temperature.

4. Method according to one of Claims 1 to 3, **characterized in that** a pure gas with a boiling point of less than -50°C or a gas mixture whereof the highest-boiling gas component has a boiling point of less than -50°C is used for the filling operation.

5. Method according to one of Claims 1 to 5, **characterized in that** the filling of the pressure vessel is carried out at a cold temperature of at least -50°C or below.

6. Method according to one of Claims 1 to 5, **characterized in that** the filling of the pressure vessel takes place at a constant or approximately constant temperature.

7. Method according to one of Claims 1 to 6, **characterized in that** a cooled pressure vessel is used for the filling of the pressure vessel, the cooling being effected by means of a refrigeration bath, a cooling block, a cold gas, cold solid particles or other refrigerants or a thermostated cooling device.

8. Method according to one of Claims 1 to 7, **characterized in that** the determination and monitoring of the filling quantity during the filling operation are carried out manometrically.

9. Method according to one of Claims 1 to 8, **characterized in that** during the filling of the pressure vessel, the pressure vessel is connected to a compressed-gas source, the compressed-gas source being at a temperature which is higher than the temperature of the pressure vessel.

10. Method according to one of Claims 1 to 9, **characterized in that** during the filling of the pressure vessel the pressure vessel is connected to a compressed-gas source, and the temperature of the pressure vessel and the compressed-gas source differ by at least 50°C and/or the temperature of the gas or gas mixture in the pressure vessel and the compressed-gas source differ by at least 50°C.

11. Method according to one of Claims 1 to 10, **characterized in that** the filling of the pressure vessel with a gas or gas mixture takes place under pressure.

12. Method according to one of Claims 1 to 11, **characterized in that** the filling of the pressure vessel takes place at a pressure of at least 10 bar absolute.

13. Method according to one of Claims 1 to 12, **characterized in that** the filling of the pressure vessel takes place at a pressure in the range from 50 to 400 bar absolute.

14. Method according to one of Claims 1 to 13, **characterized in that** the filling of the pressure vessel is carried out using a precooled gas or gas mixture.

15. Method according to one of Claims 1 to 14, **characterized in that** the gas or gas mixture is precooled to the filling temperature.

16. Method according to one of Claims 1 to 15, **characterized in that** a pressurized refrigerant is used for the cooling, or the temperature during cooling is set or controlled by the action of pressure.

17. Method according to one of Claims 1 to 16, **characterized by** its use in the filling of airbag gas generators.

## Revendications

1. Procédé de remplissage sous haute pression d'un récipient à pression avec un gaz, dans lequel on refroidit le récipient à pression et on le remplit avec au moins un gaz à une température supérieure à la température d'ébullition du gaz, on le ferme à l'état refroidi et on crée une pression dans le récipient à pression refroidi et fermé par chauffage, **caractérisé en ce que** le gaz est un mélange de gaz et **en ce que** l'on remplit le récipient à pression avec un mélange de gaz par le remplissage successif avec les composants gazeux du mélange de gaz à produire.

2. Procédé selon la revendication 1, **caractérisé en ce que** l'on produit une pression de plus de 100 bar ou de plus de 200 bar ou de plus de 300 bar dans le récipient à pression rempli par chauffage du mélange de gaz.

3. Procédé selon la revendication 1 ou 2, **caractérisé en ce que** l'on effectue le chauffage du gaz par un chauffage actif ou par un équilibrage de la température à la température ambiante, à la température de l'atmosphère, à une température supérieure à 0°C ou à une autre température.

4. Procédé selon l'une quelconque des revendications 1 à 3, **caractérisé en ce que** l'on utilise pour le remplissage un gaz pur avec une température d'ébullition inférieure à moins 50°C ou un mélange de gaz, dont le composant gazeux ayant la température d'ébullition la plus élevée présente une température d'ébullition inférieure à moins 50°C.

5. Procédé selon l'une quelconque des revendications 1 à 5, **caractérisé en ce que** l'on effectue le remplissage du récipient à pression sous un froid d'au minimum moins 50°C ou moins.

6. Procédé selon l'une quelconque des revendications 1 à 5, **caractérisé en ce que** l'on effectue le remplissage du récipient à pression à une température constante ou pratiquement constante.

7. Procédé selon l'une quelconque des revendications 1 à 6, **caractérisé en ce que** l'on utilise un récipient à pression refroidi lors du remplissage du récipient à pression, dans lequel on effectue le refroidissement au moyen d'un bain froid, d'un bloc de refroidissement, d'un gaz froid, de particules solides froides ou d'autres agents réfrigérants ou d'un dispositif de refroidissement réglable par thermostat.

8. Procédé selon l'une quelconque des revendications 1 à 7, **caractérisé en ce que** l'on effectue la détermination et le contrôle du niveau lors du remplissage par voie manométrique.

9. Procédé selon l'une quelconque des revendications 1 à 8, **caractérisé en ce que** lors du remplissage du récipient à pression, le récipient à pression est raccordé à une source de gaz sous pression, dans lequel la source de gaz sous pression présente une température qui est supérieure à la température du récipient à pression.

10. Procédé selon l'une quelconque des revendications 1 à 9, **caractérisé en ce que** lors du remplissage du récipient à pression, le récipient à pression est raccordé à une source de gaz sous pression et les températures du récipient à pression et de la source de gaz sous pression diffèrent d'au moins 50°C et/ou les températures du gaz ou du mélange de gaz dans le récipient à pression et dans la source de gaz sous pression diffèrent d'au moins 50°C.

11. Procédé selon l'une quelconque des revendications 1 à 10, **caractérisé en ce que** l'on effectue le remplissage du récipient à pression avec un gaz ou un mélange de gaz sous pression.

12. Procédé selon l'une quelconque des revendications 1 à 11, **caractérisé en ce que** l'on effectue le remplissage du récipient à pression à une pression d'au moins 10 bars absolus.

13. Procédé selon l'une quelconque des revendications 1 à 12, **caractérisé en ce que** l'on effectue le remplissage du récipient à pression à une pression de 50 à 400 bars absolus.

14. Procédé selon l'une quelconque des revendications 1 à 13, **caractérisé en ce que** l'on effectue le remplissage du récipient à pression avec un gaz ou un mélange de gaz pré-refroidi.

15. Procédé selon l'une quelconque des revendications 1 à 14, **caractérisé en ce que** l'on pré-refroidit le gaz ou le mélange de gaz à la température de remplissage.

16. Procédé selon l'une quelconque des revendications 1 à 15, **caractérisé en ce que** l'on utilise pour le refroidissement un agent réfrigérant se trouvant sous pression ou on règle, on commande ou on régule la température lors du refroidissement en agissant sur la pression.

17. Procédé selon l'une quelconque des revendications 1 à 16, **caractérisé par** l'utilisation lors du remplissage de générateurs de gaz pour coussins gonflables.
